Europäisches Patentamt

European Patent Office

Office européen des brevets

(11) Publication number: **0 311 964**
**A2**

# EUROPEAN PATENT APPLICATION

(21) Application number: **88116817.3**

(51) Int. Cl.4: **G01N 27/16**

(22) Date of filing: **11.10.88**

(30) Priority: **14.10.87 GB 8724142**

(43) Date of publication of application:
**19.04.89 Bulletin 89/16**

(84) Designated Contracting States:
**DE FR IT NL**

(71) Applicant: **Drägerwerk Aktiengesellschaft**
**Moislinger Allee 53-55**
**D-2400 Lübeck 1(DE)**

(72) Inventor: **Addison, Derek**
**46 Readhead Road**
**South Shields Tyne and Wear, NE34 6HS(GB)**
Inventor: **Iredale, Peter Julian**
**1717 Capel Road Raine**
**Braintree Essex(GB)**

(54) **Improvement to combustible gas sensors.**

(57) There is described a gas sensor comprising two electrically-conducting prongs (2) between which is disposed a bead (4) of catalytic material having embedded therein an electrical coil (6) which is connected to the two prongs (2). The bead (4) is supported by a support (3) of high mechanical strength and low thermal conductivity, adhered to the two prongs (2).

Fig. 1

EP 0 311 964 A2

# GAS SENSORS

This invention relates to an improvement in pellistor-type gas sensors.

The mode of operation of pellistors, and their construction, is described in the report entitled "The Use of Catalytic Sensing Elements for the Detection of Gases" by J.G. Firth, A. Jones and T.A. Jones, published in 1959 by the Health and Safety Executive. This report describes catalytic sensing elements (i.e. pellistors) that can be used for measuring the concentrations of various gases in air. The elements consist of a body of catalytic material in which is embedded an electrical coil. Oxidation of the gas to be measured with atmospheric oxygen takes place on the body of the catalytic material. This oxidation reaction is accompanied by the liberation of heat, and the consequent change in temperature of the catalytic material is measuring by using the electrical coil as a resistance thermometer. Alternatively, the gas to be measured is one that inhibits a reducing reaction that takes place on the body of the catalytic material, which reducing reaction is likewise accompanied by the liberation of heat. The change in temperature of the catalytic material, arising as a result of the inhibition of the reducing reaction, is likewise measured by using the electrical coil as a resistance thermometer. In both cases, the electrical coil can also be used to heat the body of catalytic material, for effecting measurements at different temperatures.

In the known devices, the body of catalytic material is supported, between two electrically-conducting prongs, by the wires leading to the electrical coil embedded in the body of catalytic material. These wires are very thin (typically of the order of 20 microns), especially in the latest devices which are designed to operate at very low power. Consequently, when the devices are subjected to mechanical shock, e.g. vibration, the wires are not capable of withstanding the forces arising from the momentum of the body of catalytic material, and break.

According to the present invention, there is provided a gas sensor comprising two electrically-conducting prongs between which is disposed a body of catalytic material having associated therewith an electrical coil which is electrically connected to the two prongs, the body of catalytic material being supported by a support that in turn is supported by the two prongs.

Preferably, the electrical coil is embedded within the body of catalytic material.

Preferably, the support extends through the body of catalytic material.

Preferably, the support has a high mechanical strength and a lower thermal conductivity. Preferably, the support has a mechanical strength of at least one order of magnitude greater than that of the coil. Preferably, the support has a thermal conductivity of approximately that of air.

For a better understanding of the present invention, reference will now be made, by way of example, to the drawings in which:

Figure 1 is a side view of a sensor of the invention;

Figure 2 is a view from one end of the sensor of Figure 1; and

Figure 3 is a view, on a larger scale, of part of the sensor of Figure 1.

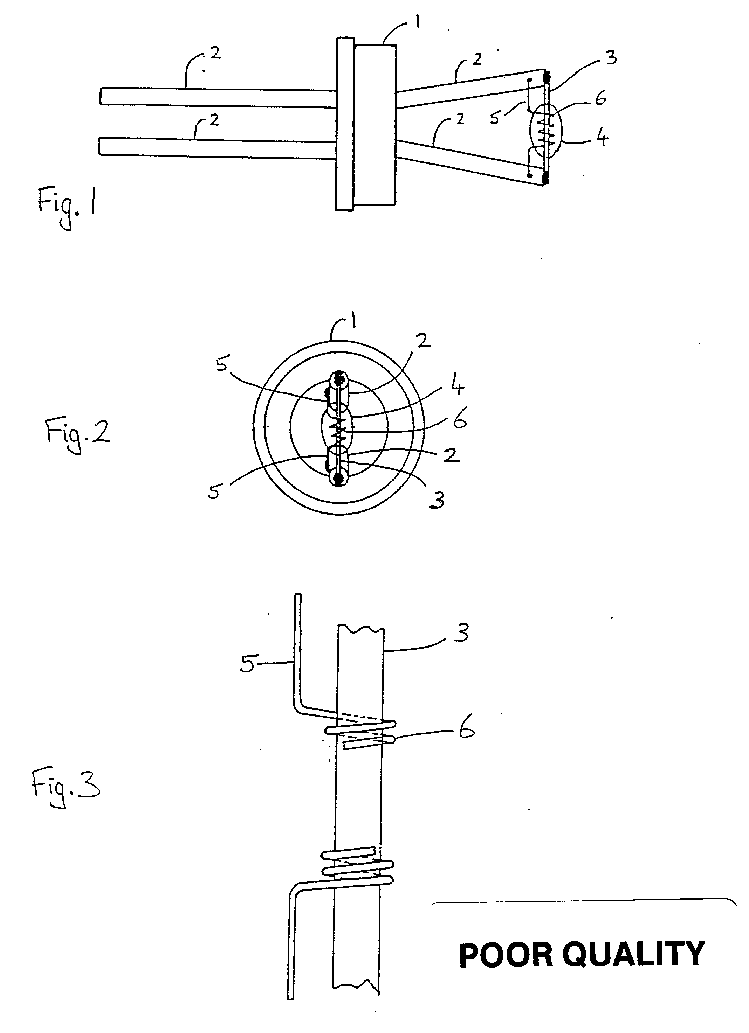

Referring to Figures 1 and 2, the sensor of the present invention consists of an electrically-insulating filament head 1 through which extend two electrical conductors 2. The conductors 2, to the right of the head 1 (as shown in Figure 1), form two prongs between the ends of which is positioned a support strand 3. This strand 3, which is adhered to the two prongs, is made of a material which has a high mechanical strength and a low thermal conductivity, for example glass/quartz fibre, carbon fibre, ruby, diamond or ceramic material.

The support strand 3 serves to support a body 4 of catalytic material (for example alumina, titanium containing ceramic material, porous glass, or other ceramic material) in the form of a bead, and a wire 5 is wound around the strand 3 to form a coil 6. This wire 5 is connected to the two electrical conductors 2. The strand 3 and coil 6 are embedded within the body 4, and thus the embedded portions thereof are not visible, even though, in Figures 1 and 2, they are shown as being visible.

The strand 3 and coil 6 are shown on an enlarged scale in Figure 3. In this figure, the coil is not fully drawn.

The sensor shown in the drawings is made in the following manner. The support strand 3 is inserted through the inside of the coil 6, which has been previously spot-welded to the prongs 2. The support strand 3 is then bonded to the prongs 2 using an adhesive or resin. The body 4 is then formed by applying a drop of a slurry of catalytic material (for example a slurry of water and α-alumina, optionally containing another catalytic material) to the coil 6 and then heating the slurry.

It can thus be seen that the support strand 3 protects the body 4 and wire 5 against mechanical shock.

## Claims

1. A gas sensor comprising two electrically-conducting prongs between which is disposed a body of catalytic material having associated therewith an electrical coil which is electrically connected to the two prongs, the body of catalytic material being supported by a support that in turn is supported by the two prongs.

2. A sensor according to Claim 1, wherein the electrical coil is embedded within the body of catalytic material.

3. A sensor according to claim 1 or 2, wherein the support extends through the body of catalytic material.

4. A sensor according to claims 2 and 3, wherein the coil is wound around the support.

5. A sensor according to any of claims 1 to 4, wherein the support is adhered to the two prongs.

6. A sensor according to any of claims 1 to 5, wherein the support has a high mechanical strength and a lower thermal conductivity.

7. A sensor according to claim 6, wherein the support has a mechanical strength of at least one order of magnitude greater than that of the coil.

8. A sensor according to claim 6 or 7, wherein the support has a thermal conductivity of approximately that of air.

9. A sensor according to any of claims 1 to 8, wherein the support comprises glass fibre, quartz fibre, carbon fibre, ruby, diamond or ceramic material.

10. A sensor according to any of claims 1 to 9, wherein the catalytic material comprises alumina.

11. A sensor according to claim 1, substantially as hereinbefore described with reference to, and as shown in, the drawings.

Fig. 1

Fig.2

Fig.3

**POOR QUALITY**